# EUROPÄISCHE PATENTSCHRIFT

(11) **EP 1 672 255 B1**
(45) Veröffentlichungstag und Bekanntmachung des Hinweises auf die Patenterteilung: **27.07.2011**
(21) Anmeldenummer: 04029530.5
(22) Anmeldetag: 14.12.2004
(51) Int. Cl.: F16J 15/08

(54) **Dichtung mit Begrenzungsbereich**
Gasket with boundary region
Joint et région frontière

(43) Veröffentlichungstag der Anmeldung: 21.06.2006
(60) Teilanmeldung: 06006827.7
(73) Patentinhaber: ElringKlinger AG, 72581 Dettingen (DE)
(72) Erfinder: Fehrecke, Herbert, 69469 Weinheim (DE)
(74) Vertreter: Hoeger, Stellrecht & Partner Patentanwälte

(56) Entgegenhaltungen:
- EP-A- 1 136 734
- DE-A1- 19 808 362
- DE-A1- 19 816 692
- GB-A- 2 278 651
- US-A- 4 803 965

## Beschreibung

### Technisches Gebiet

Die Erfindung betrifft eine Dichtung, umfassend mindestens eine flächige Lage mit mindestens einem Durchgang, einen Begrenzungsbereich und einen Dichtungsbereich, wobei der Begrenzungsbereich um den Durchgang angeordnet ist, und der Dichtungsbereich den Begrenzungsbereich umfänglich umgibt, wobei dem Begrenzungsbereich und dem Dichtungsbereich belastbare Mittel zugeordnet sind, welche den Durchgang spiralförmig umgeben, und wobei der Dichtungsbereich als Sicke ausgetaltet ist.

### Stand der Technik

Derartige Dichtungen sind bereits aus dem Stand der Technik bekannt. Dabei umfassen gattungsbildende Dichtungen häufig zwei Lagen, wobei eine Lage einen Begrenzungsbereich aufweist, dem belastbare Mittel zugeordnet sind. Die belastbaren Mittel dienen als so genannte Stopper, welche den auf dem Dichtungsbereich wirkenden Anpressdruck begrenzen sollen. Diese Begrenzung des Anpressdruckes ist notwendig, damit die Dichtung im Dichtbereich ihre optimale Wirkung entfalten kann.

Der Begrenzungsbereich ist bei manchen Dichtungen häufig in Form von Kreisen ausgebildet, welche konzentrisch um einen Durchgang angeordnet sind. Der Durchgang ist dabei beispielsweise Teil eines Kolbenraums, in welchem sich ein Zylinder eines Kraftfahrzeugmotors bewegen kann. Der Begrenzungsbereich wird zusätzlich von einem Dichtungsbereich konzentrisch umgeben.

Bei diesem konstruktiven Aufbau ist nachteilig, dass für eine Dichtungsmaßnahme ein erheblicher Raum beansprucht wird. Ein besonders kompakter Aufbau einer Dichtung, welche erlaubt, mehrere eng nebeneinander liegende Räume zuverlässig zu dichten, ist mit den gattungsbildenden Dichtungen nicht möglich.

Aus der GB 2 278 651 A ist eine Dichtung mit spiralförmigen belastbaren Mitteln bekannt, welche zwischen zwei relativ weichen und nachgiebigen Lagen eingebettet sind. Die DE 198 08 362 A 1 sowie die DE 198 16 692 A1 zeigen Dichtungen, bei denen eine Lage mit einem separaten Bauteil verbunden sind, welches spiralförmige Mittel umfasst. Aus der US 4 803 965 A ist eine Dichtung bekannt, bei der eine Lage konzentrisch angeordnete belastbare Mittel umfasst. Diese sind sandwichartig zwischen weiteren Lagen angeordnet.

### Darstellung der Erfindung

Der Erfindung liegt die Aufgabe zugrunde, eine Dichtung zu realisieren, welche nach kostengünstiger Fertigung eine hohe Funktionssicherheit gewährleistet. Die vorliegende Erfindung löst die zuvor genannte Aufgabe durch die Merkmale des Patentanspruchs 1.

Zunächst ist erkannt worden, dass die Vorkehrung einer Spirale erlaubt, den äußeren Endpunkt einer Spirale nahezu ohne räumlichen Versatz dem Endpunkt einer weiteren Spirale zuzuordnen. Hierdurch ist sicher gestellt, dass im Bereich zwischen zwei Durchgängen eine Anordnung der belastbaren Mittel derart möglich ist, dass der auf die Dichtung wirkende Anpressdruck optimiert auf die gesamte Dichtungsfläche verteilt wird. Dies wird konkret dadurch erreicht, dass die äußere Windung einer ersten Spirale im Bereich zwischen den Durchgängen endet, wobei das Ende einer benachbarten zweiten Spirale nahe dem Ende der ersten Spirale positionierbar ist. Auf raffinierte Weise ist insoweit sicher gestellt, dass eng beieinander liegende

Durchgänge bei kompaktem Aufbau der Dichtung problemlos abdichtbar sind. Die belastbaren Mittel und der Dichtungsbereich sind in einer Lage ausgeformt. Hierdurch werden erhebliche Fertigungskosten eingespart, da nur eine Lage verarbeitet werden muß. Des Weiteren ist von Vorteil, dass wirksam Fehler im Aufbau eines Lagenverbundes vermieden werden.

Die Lage könnte dabei aus Edelstahl bestehen.

Die belastbaren Mittel weisen Erhebungen und Senken relativ zur flächigen Basis der Lage auf. Dabei ist insbesondere denkbar, dass die Erhebungen und Senken wellenförmig oder sägezahnförmig ausgestaltet sind. Die Vorkehrung von Erhebungen und Senken ermöglicht das linienförmige Anpressen von Flächen an die belastbaren Mittel, wodurch diese besonders definiert mit Kraft beaufschlagbar sind.

Zwei benachbarte Erhebungen oder Senken bzw. Innenwandungen oder Außenwandungen der Spiralgänge könnten derart miteinander verbunden sein, dass ein zwischen diesen gebildeter Kanal fluiddicht verschließbar ist. Dabei ist insbesondere denkbar, dass in den Gängen der Spirale abdichtende Mittel entweder am Anfang einer Spirale oder in deren Mitte angeordnet sind um die Gänge fluiddicht zu verschließen. Diese konkrete Ausgestaltung erlaubt es, die belastbaren Mittel zugleich als abdichtende Mittel zu verwenden, da die Spirale, welche auf Grund ihrer geometrischen Form stets einen Fluid durchlässigen Kanal zwischen zwei Anpressflächen bildet, wirksam abdichtbar ist. Bei dieser konkreten Ausgestaltung ist denkbar, dass die abdichtenden Mittel in den Kanälen durch Verdickungen der Lage an definierten Stellen realisiert ist. Denkbar ist auch, Einprägungen, Ausstülpungen oder Verdickungen der Lagen oder der Gänge der Spirale vorzusehen, welche abdichtende Zwecke erfüllen.

Die Erhebungen oder Senken könnten in einer Richtung abnehmend ausgestaltet sein. Dabei ist einerseits denkbar, dass die Höhe der Erhebungen bzw. die Tiefe der Senken in Richtung Durchgang zunehmend oder andererseits abnehmend ausgestaltet sind. Diese konkreten Ausgestaltungen haben den Vorteil, dass definierte Bereiche der Spirale für Abdichtungszwecke und andere Bereich für Begrenzung des Anpressdrucks verwendet werden können. Es ist auch denkbar, die Spiralgänge in ihren Ausmaßen zumindest bereichsweise derart zu dimensionieren, dass Kapillareffekte dichtende Bereiche bilden. Dabei könnten Fluide derart in Hohlräumen eingeschlossen sein, dass diese Dichtungswirkung entfalten.

Die belastbaren Mittel könnten mindestens drei Umläufe definieren. Die Vorkehrung von drei Umläufen ist vor dem Hintergrund einer einfachen Fertigung von Bedeutung. Darüber hinaus stellt die konkrete Ausgestaltung mit drei Umläufen einen Kompromiss zwischen ausreichender Begrenzungswirkung und geringst möglicher Ausdehnung der belastbaren Mittel dar. Letzteres ist insbesondere notwendig, um eine besondere Kompaktheit der Dichtung zu erhalten.

Eine Sicke umgibt umfänglich den Begrenzungsbereich. Diese konkrete Ausgestaltung erlaubt es, den Begrenzungsbereich einzuschließen. Hierdurch ist realisierbar, dass dem Begrenzungsbereich keinerlei Dichtungsfunktionen zukommen muss. Hierdurch ist eine vereinfachte Fertigung des Begrenzungsbereichs mit erhöhter Fehlertoleranzschwelle ermöglicht, da dieser geringfügige Überstände und Unebenheiten aufweisen darf.

Die Sicke könnte als elastische Struktur ausgebildet sein. Dabei ist denkbar, die Lage, in welcher die Sicke ausgebildet ist, aus einem Material zu fertigen, welches besondere elastische Eigenschaften aufweist. Diese Maßnahmen stellen sicher, dass die Sicke bei Druckbeaufschlagung zwischen zwei flächigen Elementen deformiert und eingepresst wird.

Die belastbaren Mittel könnten starr ausgebildet sein. Die starre Ausbildung der belastbaren Mittel stellt sicher, dass zwei flächige Elemente nicht über einen definierten Abstand zusammengepresst werden können.

Die belastbaren Mittel könnten auch flexibel deformierbar ausgestaltet sein. Die belastbaren Mittel dürften bei dieser konkreten Ausgestaltung jedoch nur insoweit flexibel oder elastisch ausgebildet sein, als ein vordefinierter Abstand zwischen zwei flächigen Elementen nicht überschritten wird. Diese Maßnahme ist notwendig, um einer Struktur im Dichtungsbereich einen elastischen Freiheitsgrad zu bewahren der eine optimale Dichtheit sicherstellt.

Es gibt nun verschiedene Möglichkeiten, die Lehre der vorliegenden Erfindung auf vorteilhafte Weise auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer schematischen Ansicht nicht erfindungsgemässe belastbare Mittel in Form einer Spirale,
- Fig. 2: einen Bereich A der Spirale gemäß Fig. 1, in welchem zwei Umläufe durch ein abdichtendes Mittel miteinander verbunden sind,
- Fig. 3: eine nicht erfindungsgemässe flächige Lage mit wellenförmiger Spirale,
- Fig. 4: eine Schnittansicht einer nicht erfindungsgemässe Lage, in welcher eine spiralförmige Struktur aufgeprägt ist, und
- Fig. 5: eine erfindungsgemässe Lage mit belastbaren Mitteln, welche von einer Sicke umgeben sind.

### Ausführung der Erfindung

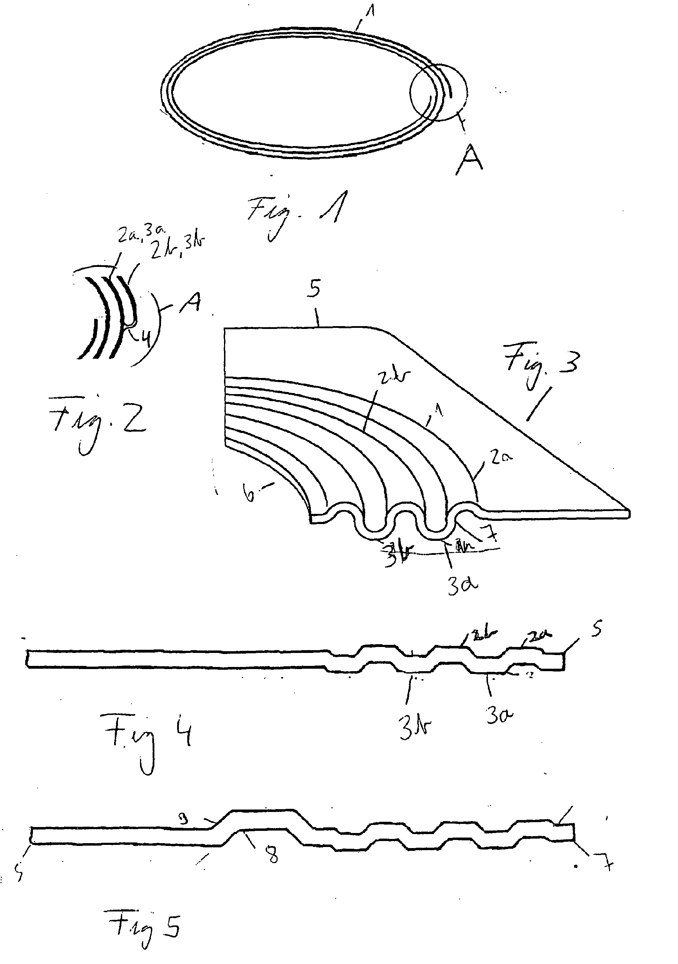

Fig. 1 zeigt in einer schematischen Ansicht belastbare Mittel 1, welche spiralförmig ausgebildet sind.

Fig. 2 zeigt zwei benachbarte Erhebungen 2a, 2b oder Senken, 3a, 3b, welche derart miteinander verbunden sind, dass ein zwischen ihnen gebildeter Kanal fluiddicht verschlossen ist. Der Verschluss erfolgt durch ein abdichtendes Mittel 4.

Fig. 3 zeigt eine flächige Lage 5 mit einem Durchgang 6, welcher einen Begrenzungsbereich 7 aufweist, dem belastbare Mittel 1 zugeordnet sind. Die belastbaren Mittel 1 sind in der Lage 5 ausgeformt und weisen Erhebungen 2a, 2b und Senken 3a, 3b auf. Die Erhebungen 2a, 2b und Senken 3a, 3b sind in Richtung des Durchgangs 6 abnehmend ausgestaltet. Die belastbaren Mittel 1 definieren drei Umläufe.

Fig. 4 zeigt die Lage gemäß Fig. 3 in einer Schnittansicht.

Fig. 5 zeigt eine Lage 5, welche einen Begrenzungsbereich 7 und einen Dichtungsbereich 8 aufweist. Der Dichtungsbereich 8 ist als trapezförmige Sicke 9 ausgestaltet.

Die Sicken 9 sind als elastische Strukturen ausgebildet, wobei die belastbaren Mittel 1 starr oder flexibel ausgebildet sein können. Die Ausgestaltung der Sicken 9 und der belastbaren Mittel 1 im Hinblick auf ihr Deformierbarkeitsverhalten bezieht sich auf alle Sicken und belastbaren Mittel der Figuren 1 bis 5.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Dichtung, umfassend mindestens eine flächige Lage (5) mit mindestens einem Durchgang (6), einen Begrenzungsbereich (7) und einen Dichtungsbereich (8),
wobei der Begrenzungsbereich (7) um den Durchgang (6) angeordnet ist, und der Dichtungsbereich (8) den Begrenzungsbereich (7) umfänglich umgibt, wobei dem Begrenzungsbereich (7) und dem Dichtungsbereich (8) belastbare Mittel (1) zugeordnet sind, welche den Durchgang (6) spiralförmig umgeben, und wobei der Dichtungsbereich als Sicke (9) ausgestaltet ist,
**dadurch gekennzeichnet,**
**dass** die belastbaren Mittel (1) und der Dichtungsbereich (8) in einer Lage (5) ausgeformt sind,
und **dass** die belastbaren Mittel (1) Erhebungen (2a,2b) und Senken (3a,3b) aufweisen.

2. Dichtung nach Anspruch 1, **dadurch gekennzeichnet, dass** der Dichtungsbereich (8) als trapezförmige Sicke (9) ausgestaltet ist.

3. Dichtung nach einem der Ansprüche 1 und 2, **dadurch gekennzeichnet, dass** zwei benachbarte Erhebungen (2a, 2b), Senken (3a, 3b), Innenwandungen oder Außenwandungen der Spirale derart miteinander verbunden sind, dass ein zwischen ihnen gebildeter Kanal fluiddicht verschließbar ist.

4. Dichtung nach einem der Ansprüche 1 bis 3, **dadurch gekennzeichnet, dass** die Erhebungen (2a, 2b) oder Senken (3a, 3b) in einer Richtung abnehmend ausgestaltet sind.

5. Dichtung nach einem der Ansprüche 1 bis 4, **dadurch gekennzeichnet, dass** die belastbaren Mittel (1) mindestens drei Umläufe definieren.

## Claims

1. Gasket comprising at least one flat layer (5) having at least one through-opening (6), a limiting area (7) and a sealing area (8),
wherein the limiting area (7) is arranged around the through-opening (6) and the sealing area (8) circumferentially surrounds the limiting area (7), wherein the limiting area (7) and the sealing area (8) have associated therewith loadable means (1) spirally surrounding the through-opening (6), and wherein the sealing area is formed as a bead (9),
**characterized in that** the loadable means (1) and the sealing area (8) are formed in one layer (5), and
**in that** the loadable means (1) have elevations (2a, 2b) and depressions (3a, 3b).

2. Gasket in accordance with claim 1, **characterized in that** the sealing area (8) is formed as a trapezoidal bead (9).

3. Gasket in accordance with one of claims 1 and 2, **characterized in that** two adjacent elevations (2a, 2b), depressions (3a, 3b), inner walls or outer walls of the spiral are interconnected such that a passage formed therebetween is adapted to be sealed in fluid-tight manner.

4. Gasket in accordance with anyone of claims 1 to 3, **characterized in that** the elevations (2a, 2b) or depressions (3a, 3b) are formed to be decreasing in one direction.

5. Gasket in accordance with any one of claims 1 to 4, **characterized in that** the loadable means (1) define at least three revolutions.

## Revendications

1. Joint d'étanchéité, comportant au moins une couche en nappe (5) avec au moins un passage (6), une zone de délimitation (7) et une zone d'étanchéité (8),
la zone de délimitation (7) étant agencée autour du passage (6), et la zone d'étanchéité (8) entourant tout le pourtour de la zone de délimitation (7),
des moyens (1) aptes à être sollicités, qui entourent le passage (6) en forme de spirale, étant associés à la zone de délimitation (7) et à la zone d'étanchéité (8),
la zone d'étanchéité étant réalisée sous la forme d'une nervure (9),
**caractérisé**
**en ce que** les moyens (1) aptes à être sollicités et la zone d'étanchéité (8) sont formés dans une couche (5),
et **en ce que** les moyens (1) aptes à être sollicités comportent des élévations (2a, 2b) et des creux (3a, 3b).

2. Joint d'étanchéité selon la revendication 1, **caractérisé en ce que** la zone d'étanchéité (8) est réalisée sous la forme d'une nervure (9) trapézoïdale.

3. Joint d'étanchéité selon l'une quelconque des revendications 1 et 2, **caractérisé en ce que** deux élévations (2a, 2b), creux (3a, 3), parois intérieures ou parois extérieures adjacents de la spirale sont reliés entre eux de telle sorte qu'un conduit formé entre ceux-ci peut être obturé de manière étanche aux fluides.

4. Joint d'étanchéité selon l'une quelconque des revendications 1 à 3 **caractérisé en ce que** les élévations (2a, 2b) ou les creux (3a, 3b) sont réalisés en décroissant dans un sens.

5. Joint d'étanchéité selon l'une quelconque des revendications 1 à 4, **caractérisé en ce que** les moyens (1) aptes à être sollicités définissent au moins trois tours.
